# EUROPÄISCHE PATENTSCHRIFT

(11) **EP 1 973 241 B1**
(45) Veröffentlichungstag und Bekanntmachung des Hinweises auf die Patenterteilung: **10.04.2013**
(21) Anmeldenummer: 08002796.4
(22) Anmeldetag: 15.02.2008
(51) Int. Cl.: H04B 7/26

(54) **Datenübertragungseinrichtung und zugehöriges Betriebsverfahren**
Data transfer device and related operating procedure
Dispositif de transmission de données et son procédé de fonctionnement

(30) Priorität: 17.03.2007 DE 102007012832
(43) Veröffentlichungstag der Anmeldung: 24.09.2008
(73) Patentinhaber: Thales Defence Deutschland GmbH, 75117 Pforzheim (DE)
(72) Erfinder: Mönch, Egon, 75196 Remchingen (DE); Herold, Rolf, 75180 Pforzheim (DE); Stoll, Udo, 71665 Vaihingen / enz (DE)
(74) Vertreter: Dreiss

(56) Entgegenhaltungen:
- DE-A1- 19 758 203
- GB-A- 2 356 325
- US-A- 5 521 925
- US-A- 5 729 542
- US-A1- 2004 032 853
- US-B1- 6 456 633
- FRY T A ET AL: "Dynamic bandwidth allocation algorithm for a mixed traffic network" PROCEEDINGS OF THE 2000 IEEE INTERNATIONAL CONFERENCE ON CONTROL APPLICATIONS. CCA. ANCHORAGE, ALASKA, SEPT. 25 - 27, 2000; [IEEE INTERNATIONAL CONFERENCE ON CONTROL APPLICATIONS], NEW YORK, NY : IEEE, US, 25. September 2000 (2000-09-25), Seiten 26-31, XP010528314 ISBN: 978-0-7803-6563-6
- HIRAGURI T ET AL: "Novel multiple access protocol for voice over IP in wireless LAN" COMPUTERS AND COMMUNICATIONS, 2002. PROCEEDINGS. ISCC 2002. SEVENTH IN TERNATIONAL SYMPOSIUM ON JULY 1-4, 2002, PISCATAWAY, NJ, USA,IEEE, 1. Juli 2002 (2002-07-01), Seiten 517-523, XP010595810 ISBN: 978-0-7695-1671-4

## Beschreibung

Die Erfindung betrifft ein Verfahren zum Betreiben einer Datenübertragungseinrichtung, bei der Daten mit Echtzeitanforderungen, insbesondere Sprach- und/oder Videodaten, und Daten ohne Echtzeitanforderungen übertragbar sind.

Die Erfindung betrifft ferner eine derartige Datenübertragungseinrichtung.

Betriebsverfahren und Datenübertragungseinrichtungen dieser Art sind bekannt und weisen den Nachteil auf, dass Daten mit Echtzeitanforderungen wie beispielsweise Sprachdaten aufgrund ihrer höheren Priorität üblicherweise bevorzugt vor Daten ohne Echtzeitanforderungen übertragen werden, so dass bei einem entsprechend hohen Aufkommen an Sprachdaten gar keine Übertragung von Daten ohne Echtzeitanforderungen mehr erfolgt, wodurch diese gleichsam blockiert werden, bis die entsprechenden Sprachdaten vollständig übertragen sind. Obwohl in vielen Fällen die verzögerte Übertragung von Daten ohne Echtzeitanforderungen tolerierbar ist, wirkt sich die beschriebene Blockierung der Daten ohne Echtzeitanforderungen störend auf den Betrieb bekannter Übertragungssysteme aus.

FRY T A ET AL: "Dynamic bandwidth allocation algorithm for a mixed traffic network" PROCEEDINGS OF THE 2000 IEEE INTERNATIONAL CONFERENCE ON CONTROL APPLICATIONS. CCA. ANCHORAGE, ALASKA, SEPT. 25 - 27, 2000; [IEEE INTERNATIONAL CONFERENCE ON CONTROL APPLCATIONS], NEW YORK, NY: IEEE, US, 25. September 2000 (2000-09-25), Seiten 26-31, XP010528314 ISBN: 978-0-7803-6563-6 discloses a dynamic bandwith allocation algorithm for a mixed traffic network.

Demgemäß ist es Aufgabe der vorliegenden Erfindung, eine Datenübertragungseinrichtung und ein Betriebsverfahren hierfür derart zu verbessern, dass die von herkömmlichen Systemen bekannten Nachteile vermieden werden.

Diese Aufgabe wird erfindungsgemäß durch die Merkmalskombination des Patentanspruchs 1 gelöst.

Durch die erfindungsgemäße Einteilung der Übertragungskapazität bzw. Datenrahmen in mehrere Kanäle, von denen mindestens ein Kanal für die Übertragung von Daten mit Echtzeitanforderungen und mindestens ein weiterer Kanal für die Übertragung von Daten ohne Echtzeitanforderungen vorgesehen ist, ist einerseits vorteilhaft gewährleistet, dass stets echtzeitkritische Daten wie Sprach- oder auch Videodaten und dergleichen ohne Wartezeiten übertragbar sind. Andererseits ist vorteilhaft auch die - bezogen auf einen Datenrahmen - gleichzeitige Übertragung von anderen Daten sichergestellt, die keine Echtzeitanforderungen aufweisen, so dass das von herkömmlichen Systemen bekannte Blockieren ausbleibt.

Eine besonders vorteilhafte Variante des erfindungsgemäßen Betriebsverfahrens sieht vor, dass zur Übertragung von Daten mit Echtzeitanforderungen vorgesehene Kanäle auch zur Übertragung von Daten ohne Echtzeitanforderungen verwendet werden, solange keine Daten mit Echtzeitanforderungen zu übertragen sind. Dadurch kann die gesamte zur Verfügung stehende Übertragungskapazität effizient zur Übertragung nicht echtzeitkritischer Daten verwendet werden, solange z.B. keine Sprachdaten zu übertragen sind. Sobald Echtzeitdaten zur Übertragung vorliegen, werden diese über den Kanal für Echtzeitdaten gesendet, und die nicht echtzeitkritischen Daten können nach wie vor über den für sie reservierten Kanal übertragen werden, nicht mehr jedoch über den nunmehr durch die Sprachdaten belegten Kanal für Echtzeitdaten. D.h., effektiv ergibt sich in diesem Fall eine Verringerung der für die nicht echtzeitkritischen Daten zur Verfügung stehenden Übertragungskapazität auf das erfindungsgemäß für sie garantierte Maß, keinesfalls jedoch die vom Stand der Technik bekannte Blockierung.

Ein besonders zuverlässiger Betrieb eines die erfindungsgemäßen Datenübertragungseinrichtungen aufweisenden Systems ergibt sich dann, wenn die Datenübertragungseinrichtung Informationen über die Belegung eines oder mehrerer Kanäle bzw. eines gesamten Datenrahmens sendet. Hierbei können demnach sowohl Informationen über einen von der betreffenden Datenübertragungseinrichtung selbst genutzten Kanal wie auch über nicht von ihr genutzte Kanäle des Datenrahmens übertragen werden. Diese Belegungsinformationen können von anderen Datenübertragungseinrichtungen empfangen und ausgewertet werden, wobei z.B. auch eine Plausibilisierung mit solchen Belegungsinformationen möglich ist, die eine Datenübertragungseinrichtung selbst durch Abhören bzw. Auswertung des Datenverkehrs ermittelt hat. Die Belegungsinformationen können beispielsweise zusammen mit den Nutzdaten eines Echtzeit- oder eines sonstigen Datenkanals übertragen werden, wodurch gleichsam eine auf den betreffenden Kanal bezogene in-Band-Signalisierung erzielt wird. Alternativ können in dem Datenrahmen auch ein oder mehrere spezielle Kanäle für die Übertragung derartiger Belegungsinformationen vorgesehen sein. Die Belegungsinformationen können auch ohne weitere Nutzdaten an andere Datenübertragungseinrichtungen des Systems übertragen werden, um diese über den Zustand der benachbarten Datenübertragungseinrichtungen zu informieren.

Durch die erfindungsgemäße Verwendung der Belegungsinformationen kann auch das sog. Hidden-station-Problem umgangen werden, bei dem nicht jede Datenübertragungseinrichtung des Systems zumindest temporär -Datenverbindung zu jeder anderen Datenübertragungseinrichtung aufweist. Dieses Problem tritt insbesondere bei mittels Funkverbindungen realisierten Systemen auf, wobei eine Datenübertragungseinrichtung durch Interferenzen bzw. Abschattungen der elektromagnetischen Wellen z.B. nur Funksignale von einer von mehreren an sich benachbarten Stationen empfängt, und wobei von ihr selbst ausgesandte Funksignale jedoch von allen benachbarten Stationen empfangbar sind. Eine auf diese Weise in ihrer Kommunikation eingeschränkte Datenübertragungseinrichtung erhält im Wege der Belegungsinformationen durch die einzige von ihr empfangbare Station auch Informationen über die Nutzung von Kanälen bzw. des Datenrahmens durch die nicht direkt von ihr empfangbaren Stationen, so dass die in ihrer Kommunikation eingeschränkte Datenübertragungseinrichtung nicht versehentlich auf von den weiteren benachbarten Stationen momentan benutzten Kanälen Daten aussendet.

Um Zugriffskonflikte zu vermeiden, ist bei einer weiteren vorteilhaften Ausführungsform der Erfindung vorgesehen, dass sich die Datenübertragungseinrichtung das Senderecht zum Aussenden von Daten auf einem bestimmten Kanal erst dann nimmt, wenn der Kanal über eine vorgebbare Wartezeit hinweg frei gewesen ist. Die entsprechende Information kann die Datenübertragungseinrichtung selber ermitteln durch Analysieren des Datenverkehrs oder auch unter Verwendung der von weiteren Datenübertragungseinrichtungen empfangenen Belegungsinformationen oder einer Kombination hieraus.

Eine weitere Minimierung des Risikos von Zugriffskonflikten bei dem Aussenden von Daten auf einem Kanal kann erfindungsgemäß dadurch erzielt werden, dass die Wartezeit abhängt von einer die Datenübertragungseinrichtung identifizierenden Kennung bzw. Adresse, so dass z.B. jeder Datenübertragungseinrichtung eines bestimmten Systems eine unterschiedliche Wartezeit zugeordnet ist. Alternativ oder ergänzend kann die Wartezeit in Abhängigkeit von dynamisch, d.h. während des Betriebs, ermittelbaren Zufallswerten gewählt werden.

Besonders vorteilhaft kann die Wartezeit auch von einer Anzahl verschiedener Frequenzbänder abhängen, auf denen die Datenübertragungseinrichtung Daten austauschen kann und zwischen denen die Datenübertragungseinrichtung, vorzugsweise nacheinander, umschaltet. Dadurch ist sichergestellt, dass die verwendeten Wartezeiten in einer Größenordnung liegen, die den beteiligten Datenübertragungseinrichtungen ein Abscannen der verschiedenen Frequenzbänder ermöglicht, bevor erneut Daten über einen Kanal übertragen werden müssen, um die Verbindung aufrechtzuerhalten bzw. das Senderecht zu behalten.

Falls die Datenübertragungseinrichtungen bzw. ein sie enthaltendes System nur ein festes Frequenzband nutzen, kann die Wartezeit demnach verhältnismäßig gering gewählt werden. Falls jedoch die Nutzung mehrerer Frequenzbänder vorgesehen ist, die nacheinander abgescannt werden, kann die Wartezeit dementsprechend größer gewählt werden, um einer Datenübertragungseinrichtung nicht das Senderecht für einen bestimmten Kanal in einem ersten Frequenzband zu entziehen, während diese gerade andere Frequenzbänder abscannt.

Bei einer besonders bevorzugten Ausführungsform kann die Wartezeit ein Vielfaches der Länge bzw. Dauer eines verwendeten Datenrahmens umfassen.

Erfindungsgemäß kann auch eine Antwortzeit festgelegt und/oder gesendet werden, innerhalb der eine zum Empfang von Daten auf einem bestimmten Kanal vorgesehene weitere Datenübertragungseinrichtung eine Antwort, vorzugsweise auf demselben Kanal, senden kann. Während der Antwortzeit dürfen weitere Datenübertragungseinrichtungen nicht auf dem bestimmten Kanal senden, das Senderecht wird durch die erfindungsgemäße Definition der Antwortzeit temporär der zuvor empfangenden Datenübertragungseinrichtung zugewiesen. Dies bedingt, dass die vorstehend beschriebene Wartezeit zur Erlangung des Senderechts z.B. erst nach Ablauf der Antwortzeit zu laufen beginnt. Die Festlegung der Antwortzeit kann vorteilhaft durch die sendende Datenübertragungseinrichtung oder auch automatisch in Abhängigkeit der gesendeten Daten erfolgen.

Beispielsweise ist es denkbar, bei Echtzeitdaten wie z.B. Sprachdaten keine Antwortzeit vorzusehen, um dem Echtzeitdatenstrom nicht unnötig Übertragungskapazität zu entziehen, zumal die Auswertung einer Antwort bzw. ein erneutes Übertragen ggf. korrupter Echtzeitdaten nicht zweckmäßig ist. Bei der Übertragung von Daten ohne Echtzeitanforderungen über einen entsprechenden Kanal kann die erfindungsgemäße Realisierung von Antwortzeiten und der temporäre Übergang des Senderechts sinnvoll sein, beispielsweise um ein einfaches Protokoll zu realisieren, das eine gesicherte Datenübertragung durch Sendewiederholungen bei Empfangsfehlern usw. ermöglicht.

Vorzugsweise ist vorgesehen, dass nach dem Verstreichen der Antwortzeit das Senderecht wieder auf die Datenübertragungseinrichtung übergeht, so dass diese nicht erneut mit weiteren Datenübertragungseinrichtungen um das Senderecht konkurrieren muss sondern direkt weitere Daten aussenden kann.

Alternativ hierzu kann auch vorgesehen sein, dass die Datenübertragungseinrichtung sich nach dem Verstreichen der Antwortzeit das Senderecht erneut aneignen muss, insbesondere durch Beobachten des betreffenden Kanals für eine/die vorgebbare Wartezeit. Hierdurch ist sichergestellt, dass weitere Datenübertragungseinrichtungen ebenfalls reelle Chancen haben, auf einen oder mehrere Kanäle zuzugreifen.

Eine Kombination beider Verfahrensvarianten ist ebenfalls denkbar, ebenso ein dynamischer Wechsel während des Betriebs, z.B. in Abhängigkeit einer Auslastung des Systems bzw. unterschiedlicher Kanäle.

Einer weiteren sehr vorteilhaften erfindungsgemäßen Verfahrensvariante zufolge ist vorgesehen, dass das Senderecht auf einem bestimmten Kanal automatisch von der sendenden Datenübertragungseinrichtung auf die empfangende Datenübertragungseinrichtung übergeht, sobald ein Sendevorgang abgeschlossen ist. Dies kann - je nach der Art zu übertragender Daten - nach einem oder mehreren Datenpaketen der Fall sein. Der Abschluss des Sendevorgangs kann durch die sendende Datenübertragungseinrichtung signalisiert werden oder sich z.B. auch aus einer Analyse empfangener Datenpakete ergeben.

Eine ganz besonders effiziente Realisierung von Sprachkonferenzen ist erfindungsgemäß dadurch gegeben, dass die Datenübertragungseinrichtung, vorzugsweise auf mehreren unterschiedlichen Kanälen, Sprachdaten mehrerer weiterer Datenübertragungseinrichtungen empfängt, und dass die Sprachdaten der weiteren Datenübertragungseinrichtungen in der Datenübertragungseinrichtung aggregiert werden.

Insbesondere ist eine direkte Addition der empfangenen Sprachdaten - ggf. nach einer vorangehenden Signalverarbeitung wie z.B. einer digital-analog-Wandlung, einer Verzögerung zum Ausgleich von Laufzeitunterschieden oder dergleichen - möglich.

Eine besonders flexible Ausführungsform des erfindungsgemäßen Betriebsverfahrens ist dadurch gekennzeichnet, dass die Struktur des Datenrahmens, insbesondere dessen Länge und/oder die Anzahl und/oder Art von Kanälen, durch die Datenübertragungseinrichtung festgelegt wird. D.h., eine Datenübertragungseinrichtung, die sich das Senderecht aneignet und als erste Datenübertragungseinrichtung zu senden beginnt, kann frei festlegen, wie lang die verwendeten Datenrahmen sind, und wie viele Kanäle welchen Typs (Echtzeitdaten, andere Daten) vorgesehen sind.

Hierdurch kann die Datenkommunikation des erfindungsgemäßen Systems vorteilhaft an die Anzahl der beteiligten Stationen, an ein Signal-/Rausch-Verhältnis und an weitere Parameter wie z.B. den Bedarf an Kanälen für Echtzeitdaten und Daten ohne Echtzeitanforderungen angepasst werden, wodurch die Betriebssicherheit und der Gebrauchsnutzen des erfindungsgemäßen Systems gesteigert wird.

Die Synchronisation weiterer Datenübertragungseinrichtungen mit einem durch eine erste sendende Datenübertragungseinrichtung vorgegebenen Datenrahmen erfolgt durch eine entsprechende Auswertung der Belegungsinformation seitens der weiteren Datenübertragungseinrichtungen und durch eine Orientierung an dem Beginn/Ende von bereits genutzten Kanälen. Da sich jede sendende Datenübertragungseinrichtung z.B. an dem Ende eines Zeitfensters eines vorangehenden Kanals bzw. Datenrahmens orientiert, ist das erfindungsgemäße System tolerant gegenüber Phasenschwankungen (Jitter) der einzelnen Zeitfenster der Kanäle und dementsprechend robust. Der bereits beschriebene Abgleich der Kanalbelegung unter Verwendung der von weiteren Datenübertragungseinrichtungen erhaltenen Belegungsinformationen trägt zur weiteren Steigerung der Robustheit des erfindungsgemäßen Betriebsverfahrens bei.

Besonders vorteilhaft kann die Festlegung der Struktur des Datenrahmens auch dynamisch erfolgen, so dass im Betrieb oder sogar während der - vorzugsweise in mehreren Datenpaketen erfolgenden - Übertragung eines Datenstroms, der Datenrahmen oder auch die Kanalzahl aktuellen Erfordernissen angepasst werden kann. Auf diese Weise können beispielsweise bei einer drastischen Verschlechterung des Funkempfangs bei funkbasierten Systemen mehrere Kanäle verworfen werden und die entsprechende Übertragungskapazität den beiden erfindungsgemäß vorgesehenen Basiskanälen für Echtzeitdaten und Daten ohne Echtzeitanforderungen zur Verfügung gestellt werden, z.B. zur weiteren Absicherung von auf diesen Kanälen erfolgenden Datenübertragungen durch die Hinzufügung redundanter Daten usw.

Bei einer weiteren sehr vorteilhaften Ausführungsform des erfindungsgemäßen Verfahrens ist vorgesehen, dass über den Kanal zur Übertragung von Daten mit Echtzeitanforderungen codierte, insbesondere MELP-, mixed excitation linear predictive, codierte Sprachdaten übertragen werden. Ganz besonders vorteilhaft ist der Echtzeitkanal bzw. sein Zeitfenster innerhalb des Datenrahmens so gewählt, dass ein ganzzahliges Vielfaches der MELP-codierten Sprachdatenpakete in dem Zeitfenster integrierbar ist.

Obwohl das erfindungsgemäße Betriebsverfahren aufgrund seiner Robustheit und Flexibilität insbesondere für die Datenübertragung über Funkkanäle geeignet ist, kann die Datenübertragung auch über andere Kanäle erfolgen.

Bei einem bevorzugten Ausführungsbeispiel sind innerhalb des Datenrahmens Zeitfenster von etwa 40 Millisekunden je Kanal vorgesehen, so dass ein Datenrahmen mit zwei Kanälen einschließlich Overhead, insbesondere für die Belegungsinformationen, einer Zeitdauer von etwa 90 Millisekunden entspricht.

Als weitere Lösungen der Aufgabe der vorliegenden Erfindung sind eine Datenübertragungseinrichtung gemäß Patentanspruch 16 und ein System gemäß Patentanspruch 18 angegeben.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung.

In der Zeichnung zeigt:
- Figur 1: schematisch ein Blockschaltbild eines erfindungsgemäßen Systems mit mehreren Datenübertragungseinrichtungen,
- Figur 2a: einen dem erfindungsgemäßen Betriebsverfahren zufolge gebildeten Datenrahmen, und
- Figur 2b: weitere dem erfindungsgemäßen Betriebsverfahren zufolge gebildete Datenrahmen.

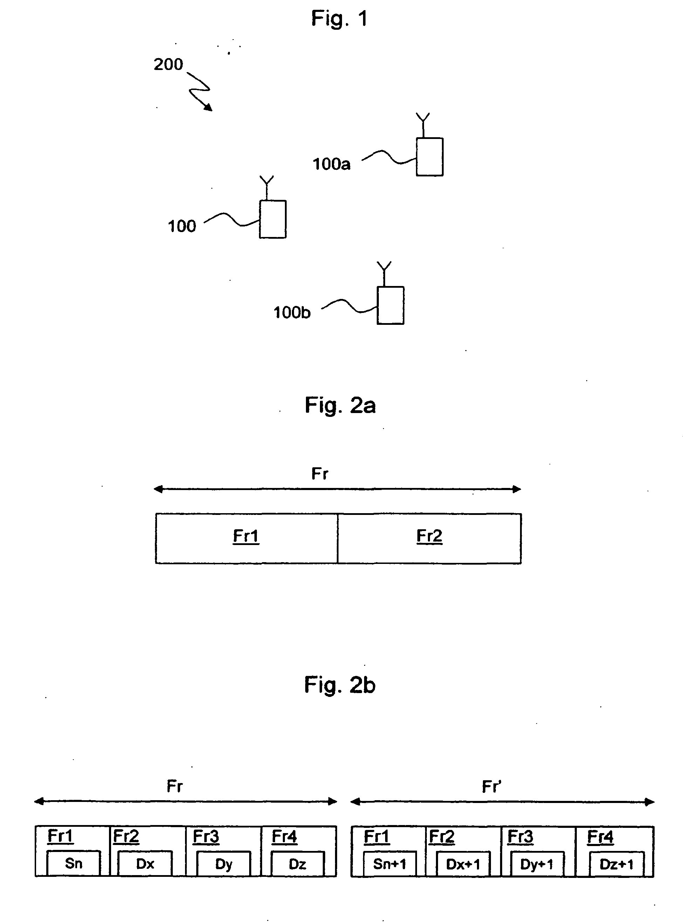

Das in Figur 1 abgebildete Datenübertragungssystem 200 weist mehrere erfindungsgemäße Datenübertragungseinrichtungen 100, 100a, 100b auf, die nachfolgend kurz als Stationen bezeichnet werden und beispielhaft zur drahtlosen Datenübertragung über entsprechende Funkkanäle ausgebildet sind.

Bei den Stationen 100, 100a, 100b kann es sich um beispielsweise allgemein auch als Funkgeräte bezeichnete Datenübertragungseinrichtungen handeln oder um in andere Systeme wie z.B. Computer integrierbare Module, die dort eine dem Funkgerät vergleichbare Funktionalität bereitstellen.

Das erfindungsgemäße Betriebsverfahren sieht vor, dass die in den von den Stationen 100, 100a, 100b nutzbaren Funkkanälen zur Verfügung stehende Übertragungskapazität so in mehrere Kanäle aufweisende Datenrahmen aufgeteilt wird, dass mindestens ein erster Kanal zur Übertragung von Daten mit Echtzeitanforderungen gebildet wird, und dass mindestens ein zweiter Kanal zur Übertragung von Daten ohne Echtzeitanforderungen gebildet wird.

Figur 2 zeigt einen entsprechenden Datenrahmen Fr, der entsprechend in ein erstes Zeitfenster Fr1 und ein zweites Zeitfenster Fr2 aufgeteilt ist. Das erste Zeitfenster Fr1 entspricht derjenigen Übertragungszeit innerhalb des Datenrahmens Fr, die dem ersten, zur Übertragung von Echtzeitdaten und nachstehend kurz als Echtzeitkanal zugeordneten Kanal zugewiesen ist. Das zweite Zeitfenster Fr2 entspricht derjenigen Übertragungszeit innerhalb des Datenrahmens Fr, die dem zweiten, zur Übertragung von Daten ohne Echtzeitanforderungen zugeordneten Kanal zugewiesen ist.

Die erfindungsgemäße Einteilung des Datenrahmens Fr in diese mindestens zwei Kanäle ermöglicht vorteilhaft die - bezogen auf einen Datenrahmen - gleichzeitige Übertragung von Echtzeitdaten in dem Echtzeitkanal und anderen Daten in dem weiteren Kanal, der dem zweiten Zeitfenster Fr2 entspricht.

Unter Echtzeitdaten sind vorliegend solche Daten zu verstehen, deren Übertragung besondere Anforderungen an die (maximale) Übertragungsdauer und/oder Varianz der Übertragungsdauer oder vergleichbare Parameter stellt.

Typische Beispiele für Echtzeitdaten sind Videodaten oder Sprache. Darüberhinaus werden vorliegend auch solche Daten als Echtzeitdaten angesehen, bei denen es sich nicht um Videodaten oder Sprache handelt, die jedoch ebenfalls mit besonders geringer (maximaler) Übertragungsdauer und/oder Varianz der Übertragungsdauer zu übertragen sind. Hierbei kann es sich z.B. um Daten handeln, die von einem ersten Computersystem, das mit der Station 100 (Figur 1) verbunden bzw. verbindbar ist, an ein weiteres Computersystem zu übertragen sind, das räumlich entfernt angeordnet und zum Empfang der Daten mit der weiteren Station 100a verbunden/verbindbar ist.

Bei Daten ohne Echtzeitanforderungen kann es sich beispielsweise um Emails handeln.

Durch die erfindungsgemäße Einteilung des Datenrahmens in den mindestens einen Echtzeitkanal und mindestens einen Kanal für Daten ohne Echtzeitanforderungen wird vorteilhaft ein Blockieren der Übertragung der Daten ohne Echtzeitanforderungen vermieden, wie es bei herkömmlichen Systemen der Fall ist, die z.B. Sprachdaten mit einer einfachen Prioritätsregelung bevorzugt vor Email oder dergleichen übertragen. Bei einem entsprechend hohen Aufkommen von Sprach- oder anderen Echtzeitdaten werden die Emails in dem bekannten System solange blockiert, bis keine Sprach- oder anderen Echtzeitdaten mehr zur Übertragung vorliegen.

Im Unterschied hierzu stellt das erfindungsgemäße Betriebsverfahren sicher, dass zumindest in dem durch das Zeitfenster Fr2 gebildeten Kanal stets auch Daten ohne Echtzeitanforderungen übertragen werden können, so dass die aus dem Stand der Technik bekannten Blockierungen vermieden werden.

Figur 2b zeigt zwei zeitlich aufeinander folgende Datenrahmen Fr, Fr' einer weiteren Ausführungsform der Erfindung. Wie aus Figur 2b ersichtlich, weist jeder Datenrahmen Fr, Fr' insgesamt vier Zeitfenster Fr1, Fr2, Fr3, Fr4 auf. Das erste Zeitfenster Fr1 ist wie bei dem bereits unter Bezugnahme auf Figur 2a beschriebenen Ausführungsbeispiel zur Realisierung eines Echtzeitkanals vorgesehen. Entsprechend werden in dem Zeitfenster Fr1 der Datenrahmen Fr, Fr' Sprachdatenpakete Sn. Sn+1, .. übertragen, wie sie z.B. an dem Ausgang eines nicht abgebildeten Sprachcodierers erhalten werden.

Die drei weiteren Zeitfenster Fr2, Fr3, Fr4 dienen zur Realisierung von Kanälen zur Übertragung weiterer Daten, die vorliegend keine Echtzeitanforderungen haben, z.B. Emails oder dergleichen. Dementsprechend werden in den jeweiligen Zeitfenstern Fr2, Fr3, Fr4 der Datenrahmen Fr, Fr' Datenpakete Dx, Dx+1, .. bzw. Dy, Dy+1, .. bzw. Dz, Dz+1, .. übertragen.

Solange keine Echtzeitdaten zu übertragen sind, kann der durch das Zeitfenster Fr1 gebildete Echtzeitkanal auch zur Übertragung anderer Daten verwendet werden. Deren Übertragung muss jedoch eingestellt bzw. auf einen anderen Kanal verlegt werden, sobald wieder Echtzeitdaten zu übertragen sind.

Besonders vorteilhaft kann eine sendende Station 100 auch Informationen über die Belegung eines oder mehrere Kanäle bzw. des gesamte Datenrahmens senden, um sicherzustellen, dass weitere Stationen über die Auslastung des Systems 200 informiert werden. Insbesondere kann hierdurch auch das sog. hidden-station-Problem vermieden werden.

Jede Station kann von einer weiteren Station empfangene Belegungsinformationen mit selbst ermittelten Belegungsinformationen plausibilisieren, wodurch die Betriebssicherheit des Systems 200 weiter gesteigert wird. Die Belegungsinformationen können beispielsweise nach Art einer in-Band-Signalisierung zusätzlich zu anderen Daten in einem Datenkanal übertragen werden oder auch in einem eigens für diesen Zweck definierten Kanal.

Erfindungsgemäß nimmt sich eine Station 100b, die Daten aussenden möchte, das Senderecht zum Aussenden von Daten auf einem bestimmten Kanal erst dann, wenn der betreffende Kanal über eine vorgebbare Wartezeit hinweg frei gewesen ist. Dies kann durch Analyse des Datenverkehrs oder auch durch Auswertung der von weiteren Stationen empfangenen Belegungsinformationen festgestellt werden.

Um Konflikte zwischen mehreren Stationen bei dem Sendezugriff zu vermeiden, kann jeder Station 100, 100a, 100b eine individuelle Wartezeit zugewiesen sein, die auch eine zufallsbasierte Komponente enthalten kann.

Sofern die Stationen 100, 100a, 100b für den Betrieb auf mehreren Frequenzbändern ausgelegt sind, kann die Wartezeit in Abhängigkeit der Anzahl der Frequenzbänder gewählt werden bzw. in Abhängigkeit einer Zeit, die eine Station für das Abscannen der verfügbaren Frequenzbänder benötigt. Dadurch ist ein zuverlässiger Betrieb der Stationen 100, 100a, 100b und eine faire Ressourcenzuteilung der Kanäle auch unter Verwendung verschiedener Frequenzbänder möglich.

Eine sendende Station 100 kann einer empfangenden Station 100a das Senderecht übertragen, indem sie eine Antwortzeit festlegt und an die empfangende Station 100a sendet. Innerhalb der Antwortzeit verfügt die seither empfangende Station 100a über das Senderecht und kann Daten auf dem betreffenden Kanal senden. Bevorzugt wird derselbe Kanal wie für die seitherige Datenübertragung zwischen der Station 100 und der Station 100a verwendet. Sofern die eine Antwortzeit definierende Station 100 über das Senderecht auf einem weiteren Kanal verfügt, kann sie der Station 100a analog auch das Senderecht für diesen weiteren Kanal übertragen.

Das Definieren einer Antwortzeit für eine bestimmte Station 100a bedingt für weitere, seither nicht an der Kommunikation beteiligte Stationen 100b, dass diese während der Antwortzeit kein Senderecht auf dem betreffenden Kanal haben oder erlangen können. Üblicherweise muss die weitere Station 100b im Wege der bereits beschriebenen Wartezeit seit Inaktivität auf einem betrachteten Kanal das Senderecht erlangen, wobei die weitere Station 100b z.B. mit der Station 100 um das Senderecht konkurriert.

Es kann erfindungsgemäß ebenfalls vorgesehen sein, dass das Senderecht nach Ablauf der Antwortzeit wieder auf die zuvor sendende Station 100 übergeht.

Neben dem auf der Definition einer Antwortzeit basierenden Mechanismus kann erfindungsgemäß auch vorgesehen sein, dass das Senderecht auf einem bestimmten Kanal automatisch von der seither sendenden Station 100 auf die seither empfangende Station 100a übergeht, bis diese Station 100a das Senderecht von sich aus aufgibt oder überträgt. Dies ist vorzugsweise dann der Fall, wenn der Sendevorgang seitens der Station 100 abgeschlossen ist, was durch eine besondere Signalisierung angezeigt oder auch durch Analyse empfangener Datenpakete ermittelt werden kann.

Das erfindungsgemäße System 200 erlaubt die effiziente Realisierung von Sprachkonferenzen dadurch, dass eine Station 100, vorzugsweise auf mehreren unterschiedlichen Kanälen, Sprachdaten mehrerer weiterer Stationen 100a, 100b empfängt, und dass die Sprachdaten der weiteren Stationen 100a, 100b in der Station 100 aggregiert, insbesondere miteinander addiert, werden. Bei MELP-codierten Sprachdaten können diese z.B. paketweise in der Station 100 zunächst decodiert werden und dann beispielsweise in digitaler Form addiert, zu Analogsignalen gewandelt und über eine entsprechende Ausgabeeinheit ausgegeben werden.

Ganz besonders vorteilhaft erlaubt das erfindungsgemäße Verfahren die Festlegung der Struktur des Datenrahmens Fr (Figur 2a), insbesondere dessen Länge und/oder die Anzahl und/oder Art von Kanälen, durch die Station 100, so dass hierfür z.B. keine separate zentrale Steuerung vorgesehen sein muss. Vielmehr kann jede Station 100, 100a, 100b selber die Struktur der Datenrahmen Fr festlegen, wodurch eine robuste und flexible dezentrale Steuerung der Kommunikation in dem System 200 ermöglicht wird.

Die Festlegung der Struktur des Datenrahmens Fr kann besonders bevorzugt auch dynamisch erfolgen, um die Betriebseigenschaften des Systems 200 bei Bedarf z.B. an äußere Einflüsse wie sich ändernde Rauschpegel bei einer Funkübertragung oder das Hinzutreten weiterer Stationen anpassen zu können.

Aufgrund der Robustheit und der Flexibilität des erfindungsgemäßen Betriebsverfahrens ist es insbesondere auch zur Realisierung von verhältnismäßig schmalbandigen Echtzeitfunknetzen verwendbar, die eine Datenrate von wenigen kilobit/s bis zu einigen zehn kilobit/s aufweisen. Bei Datenraten in dieser Größenordnung sind die erfindungsgemäßen Mechanismen zur Erlangung des Senderechts bekannten Verfahren wie z.B. den CSMA-basierten Verfahren hochbitratiger Systeme überlegen, da die bekannten Verfahren durch den erforderlichen Protokoll-Overhead die Nutzdatenrate zu stark begrenzen würden.

Bei der Verwendung eines Echtzeitkanals zur Übertragung MELP-codierter Sprachdaten sowie eines weiteren Kanals für nicht echtzeitkritische Daten kann beispielsweise innerhalb des Datenrahmens Fr ein Zeitfenster Fr1, Fr2 von etwa 40 Millisekunden je Kanal vorgesehen sein.

Je nach der verwendeten Datenrate und Kanal- bzw. Rahmenstruktur können in dem erfindungsgemäßen System Datenpakete unter Verwendung verschiedener Protokolle übertragen werden, wobei die Verwendung des Internet Protocol bevorzugt ist. Ggf. müssen die zu übertragenden Datenpakete entsprechend segmentiert und auf mehrere Datenrahmen aufgeteilt werden. Bei der Übertragung von MELP-codierten Sprachdaten ist es besonders zweckmäßig, die Länge eines einem Kanal entsprechenden Zeitfensters in dem Datenrahmen so zu wählen, dass ein ganzzahliges Vielfaches der MELP-codierten Sprachdatenpakete darin integrierbar ist.

## Patentansprüche

1. Verfahren zum Betreiben einer Datenübertragungseinrichtung (100), bei der Daten mit Echtzeitanforderungen, insbesondere Sprach- und/oder Videodaten, und Daten ohne Echtzeitanforderungen übertragbar sind, wobei eine zur Verfügung stehende Übertragungskapazität so in mehrere Kanäle aufweisende Datenrahmen (Fr) aufgeteilt wird, dass mindestens ein erster Kanal zur Übertragung von Daten mit Echtzeitanforderungen gebildet wird, und dass mindestens ein zweiter Kanal zur Übertragung von Daten ohne Echtzeitanforderungen gebildet wird, **dadurch gekennzeichnet, dass** die Datenübertragungseinrichtung (100) ein Senderecht für mindestens einen Kanal auf eine weitere Datenübertragungseinrichtung (100a) überträgt, indem die Datenübertragungseinrichtung (100) eine Antwortzeit für die weitere Datenübertragungseinrichtung (100a) festlegt und an die weitere Datenübertragungseinrichtung (100a) sendet.

2. Verfahren nach Anspruch 1, **dadurch gekennzeichnet, dass** zur Übertragung von Daten mit Echtzeitanforderungen vorgesehene Kanäle auch zur Übertragung von Daten ohne Echtzeitanforderungen verwendet werden, solange keine Daten mit Echtzeitanforderungen zu übertragen sind.

3. Verfahren nach einem der vorstehenden Ansprüche, **dadurch gekennzeichnet, dass** die Datenübertragungseinrichtung (100) Informationen über die Belegung eines oder mehrerer Kanäle bzw. eines gesamten Datenrahmens (Fr) sendet.

4. Verfahren nach einem der vorstehenden Ansprüche, **dadurch gekennzeichnet, dass** sich die Datenübertragungseinrichtung (100) das Senderecht zum Aussenden von Daten auf einem bestimmten Kanal erst dann nimmt, wenn der Kanal über eine vorgebbare Wartezeit hinweg frei gewesen ist.

5. Verfahren nach Anspruch 4, **dadurch gekennzeichnet, dass** die Wartezeit abhängt von einer die Datenübertragungseinrichtung (100) identifizierenden Kennung bzw. Adresse und/oder von dynamisch ermittelbaren Zufallswerten.

6. Verfahren nach Anspruch 4 oder 5, **dadurch gekennzeichnet, dass** die Wartezeit abhängt von einer Anzahl verschiedener Frequenzbänder, auf denen die Datenübertragungseinrichtung (100) Daten austauschen kann und zwischen denen die Datenübertragungseinrichtung (100), vorzugsweise nacheinander, umschaltet.

7. Verfahren nach Anspruch 1, **dadurch gekennzeichnet, dass** nach dem Verstreichen der Antwortzeit das Senderecht wieder auf die Datenübertragungseinrichtung (100) übergeht.

8. Verfahren nach Anspruch 1, **dadurch gekennzeichnet, dass** die Datenübertragungseinrichtung (100) sich nach dem Verstreichen der Antwortzeit das Senderecht erneut aneignen muss, insbesondere durch Beobachten des betreffenden Kanals für eine/die vorgebbare Wartezeit.

9. Verfahren nach einem der vorstehenden Ansprüche, **dadurch gekennzeichnet, dass** das Senderecht auf einem bestimmten Kanal automatisch von der sendenden Datenübertragungseinrichtung (100) auf die empfangende Datenübertragungseinrichtung (100a) übergeht, sobald ein Sendevorgang abgeschlossen ist.

10. Verfahren nach einem der vorstehenden Ansprüche,
**dadurch gekennzeichnet, dass** die Datenübertragungseinrichtung (100), vorzugsweise auf mehreren unterschiedlichen Kanälen, Sprachdaten mehrerer weiterer Datenübertragungseinrichtungen (100a, 100b) empfängt, und dass die Sprachdaten der weiteren Datenübertragungseinrichtungen (100a, 100b) in der Datenübertragungseinrichtung (100) aggregiert, insbesondere miteinander addiert, werden.

11. Verfahren nach einem der vorstehenden Ansprüche,
**dadurch gekennzeichnet, dass** die Struktur des Datenrahmens (Fr), insbesondere dessen Länge und/oder die Anzahl und/oder Art von Kanälen, durch die Datenübertragungseinrichtung (100) festgelegt wird.

12. Verfahren nach Anspruch 11, **dadurch gekennzeichnet, dass** die Festlegung der Struktur des Datenrahmens (Fr) dynamisch erfolgt.

13. Verfahren nach einem der vorstehenden Ansprüche,
**dadurch gekennzeichnet, dass** über den Kanal zur Übertragung von Daten mit Echtzeitanforderungen codierte, insbesondere MELP-, mixed excitation linear predictive, codierte Sprachdaten übertragen werden.

14. Verfahren nach einem der vorstehenden Ansprüche,
**dadurch gekennzeichnet, dass** die Datenübertragung über Funkkanäle erfolgt.

15. Verfahren nach einem der vorstehenden Ansprüche,
**dadurch gekennzeichnet, dass** innerhalb des Datenrahmens (Fr) etwa 40 Millisekunden je Kanal vorgesehen sind.

16. Datenübertragungseinrichtung (100, 100a, 100b) zur Übertragung von Daten mit Echtzeitanforderungen, insbesondere Sprach- und/oder Videodaten, und Daten ohne Echtzeitanforderungen, wobei die Datenübertragungseinrichtung (100, 100a, 100b) dazu ausgebildet ist, eine zur Verfügung stehende Übertragungskapazität so in mehrere Kanäle aufweisende Datenrahmen (Fr) aufzuteilen, dass mindestens ein erster Kanal zur Übertragung von Daten mit Echtzeitanforderungen gebildet wird, und dass mindestens ein zweiter Kanal zur Übertragung von Daten ohne Echtzeitanforderungen gebildet wird, **dadurch gekennzeichnet, dass** die Datenübertragungseinrichtung (100, 100a, 100b) dazu ausgebildet ist, ein Senderecht für mindestens einen Kanal auf eine weitere Datenübertragungseinrichtung (100a) zu übertragen, indem die Datenübertragungseinrichtung (100) eine Antwortzeit für die weitere Datenübertragungseinrichtung (100a) festlegt und an die weitere Datenübertragungseinrichtung (100a) sendet.

17. Datenübertragungseinrichtung (100, 100a, 100b) nach Anspruch 16, **dadurch gekennzeichnet, dass** sie zur Ausführung des Verfahrens nach einem der Ansprüche 1 bis 15 ausgebildet ist.

18. System (200) zur Datenübertragung mit mehreren Datenübertragungseinrichtungen (100, 100a, 100b) nach Anspruch 16 oder 17.

## Claims

1. Method of operating a data transmission arrangement (100) by which data having real-time requirements, and in particular speech and/or video data, and data not having real-time requirements can be transmitted, a transmission capacity which is available being divided into data frames (Fr) having a plurality of channels in such a way that at least one first channel for transmitting data having real-time requirements is formed, and in such a way that at least one second channel for transmitting data not having real-time requirements is formed, **characterised in that** the data transmission arrangement (100) transmits a right to transmit for at least one channel to a further data transmission arrangement (100a), which the data transmission arrangement (100) does by laying down a response time for the further data transmission arrangement (100a) and transmitting it to the further data transmission arrangement (100a).

2. Method according to claim 1, **characterised in that** the channels intended for the transmission of data having real-time requirements are also used for transmitting data not having real-time requirements provided there is no data having real-time requirements to be transmitted.

3. Method according to either of the preceding claims, **characterised in that** the data transmission arrangement (100) transmits information on the occupancy of one or more channels or of a complete data frame (Fr).

4. Method according to one of the preceding claims, **characterised in that** the data transmission arrangement (100) only assumes the right to transmit data on a given channel when the channel has been free for more than a presettable waiting time.

5. Method according to claim 4, **characterised in that** the waiting time depends on a code or address which identifies the data transmission arrangement (100) and/or on random values which can be determined dynamically.

6. Method according to claim 4 or 5, **characterised in that** the waiting time depends on a number of different frequency bands on which the data transmission arrangement (100) is able to exchange data and between which the data transmission arrangement (100) switches, preferably in succession.

7. Method according to claim 1, **characterised in that**, on the waiting time elapsing, the right to transmit reverts to the data transmission arrangement (100).

8. Method according to claim 1, **characterised in that**, on the waiting time elapsing, the data transmission arrangement (100) has to re-appropriate the right to transmit, in particular by observing the channel concerned for a/the presettable waiting time.

9. Method according to one of the preceding claims, **characterised in that** the right to transmit on a given channel is transferred from the transmitting data transmission arrangement (100) to the receiving data transmission arrangement (100a) automatically as soon as a transmission operation is completed.

10. Method according to one of the preceding claims, **characterised in that** the data transmission arrangement (100) receives speech data from a plurality of other data transmission arrangements (100a, 100b), preferably on a plurality of different channels, and **in that** the speech data from the other data transmission arrangements (100a, 100b) is aggregated, and in particular added together, in the data transmission arrangement (100).

11. Method according to one of the preceding claims, **characterised in that** the structure of the data frame (Fr), and in particular the length thereof and/or the number and/or nature of the channels, is laid down by the data transmission arrangement (100).

12. Method according to claim 11, **characterised in that** laying down of the structure of the data frame (Fr) takes place dynamically.

13. Method according to one of the preceding claims, **characterised in that** encoded speech data, and in particular mixed excitation linear prediction (MELP) encoded speech data, is transmitted over the channel for transmitting data having real-time requirements.

14. Method according to one of the preceding claims, **characterised in that** the data transmission takes place over radio channels.

15. Method according to one of the preceding claims, **characterised in that** approximately 40 milliseconds per channel are provided within the data frame (Fr).

16. Data transmission arrangement (100, 100a, 100b) for transmitting data having real-time requirements, and in particular speech and/or video data, and data not having real-time requirements, the data transmission arrangement (100, 100a, 100b) being designed to divide a transmission capacity which is available into data frames (Fr) having a plurality of channels in such a way that at least one first channel for transmitting data having real-time requirements is formed, and in such a way that at least one second channel for transmitting data not having real-time requirements is formed, **characterised in that** the data transmission arrangement (100, 100a, 100b) is designed to transmit a right to transmit for at least one channel to a further data transmission arrangement (100a), which the data transmission arrangement (100) does by laying down a response time for the further data transmission arrangement (100a) and transmitting it to the further data transmission arrangement (100a).

17. Data transmission arrangement (100, 100a, 100b) according to claim 16, **characterised in that** it is designed to carry out the method according to one of claims 1 to 15.

18. System (200) for transmitting data having a plurality of data transmission arrangements (100, 100a, 100b) according to claim 16 or 17.

## Revendications

1. Procédé de gestion d'une installation de transmission de données (100) transmettant des données avec impératif de temps réel, notamment des données vocales et/ou des données vidéo, ainsi que des données sans impératif de temps réel, la capacité de transmission disponible étant divisée en trames de données (Fr) à plusieurs canaux, et au moins un premier canal servant à transmettre les données à impératif de temps réel et au moins un second canal servant à transmettre les données sans impératif de temps réel,
procédé **caractérisé en ce que**
l'installation de transmission de données (100) transfère un droit d'émission pour au moins un canal à une autre installation de transmission de données (100a) **en ce que** l'installation de transmission de données (100) fixe un temps de réponse à l'autre installation de transmission de données (100a) et l'envoie à cette autre installation de transmission de données (100a).

2. Procédé selon la revendication 1,
**caractérisé par**
plusieurs canaux pour transmettre les données avec impératif de temps réel et aussi pour transmettre des données sans impératif de temps réel aussi longtemps qu'il n'y a pas à transmettre de données avec impératif de temps réel.

3. Procédé selon l'une des revendications précédentes,
**caractérisé en ce que**
l'installation de transmission de données (100) émet des informations concernant l'occupation d'un ou plusieurs canaux ou de la totalité d'une trame de données (Fr).

4. Procédé selon l'une des revendications précédentes,
**caractérisé en ce que**
l'installation de transmission de données (100) prend le droit d'émission pour émettre les données sur un canal déterminé seulement si le canal est resté libre pendant une durée d'attente prédéfinie.

5. Procédé selon la revendication 4,
**caractérisé en ce que**
le temps d'attente dépend d'une caractéristique ou d'une adresse et/ou de valeurs aléatoires déterminées de manière dynamique par l'installation de transmission de données (100).

6. Procédé selon la revendication 4 ou 5,
**caractérisé en ce que**
le temps d'attente dépend d'un nombre de bandes de fréquence différentes dans lesquelles l'installation de transmission de données (100) peut échanger des données et entre lesquelles l'installation de transmission de données (100) commute de préférence successivement.

7. Procédé selon la revendication 1,
**caractérisé en ce qu'**
à la fin du temps de réponse, le droit d'émission est restitué à l'installation de transmission de données (100).

8. Procédé selon la revendication 1,
**caractérisé en ce qu'**
à la fin du temps de réponse, l'installation de transmission de données (100), doit de nouveau s'approprier le droit d'émission, notamment en observant le canal concerné pendant un/le temps d'attente prédéfini.

9. Procédé selon l'une des revendications précédentes,
**caractérisé en ce que**
le droit d'émission est transféré à un certain canal automatiquement par l'installation de transmission de données (100) vers l'installation de transmission de données, réceptrice (100a) dès qu'une opération d'émission est terminée.

10. Procédé selon l'une des revendications précédentes,
**caractérisé en ce que**
l'installation de transmission de données (100) reçoit des données vocales de plusieurs autres installations de transmission de données (100a, 100b), de préférence par plusieurs canaux différents et elle agrège, notamment additionne, les données vocales des autres installations de transmission de données (100a, 100b) dans l'installation de transmission de données (100).

11. Procédé selon l'une des revendications précédentes,
**caractérisé en ce que**
la structure de la trame de données (Fr), notamment sa longueur et/ou le nombre et/ou la nature des canaux, est fixée par l'installation de transmission de données (100).

12. Procédé selon la revendication 11,
**caractérisé en ce que**
la structure de la trame de données (Fr) est fixée de manière dynamique.

13. Procédé selon l'une des revendications précédentes,
**caractérisé en ce que**
des données codées avec impératif de temps réel, notamment suivant la norme de codage MELP (mixte excitation de prédiction linéaire) sont transmises par le canal.

14. Procédé selon l'une des revendications précédentes,
**caractérisé en ce que**
la transmission des données se fait par des canaux radiaux.

15. Procédé selon l'une des revendications précédentes,
**caractérisé en ce que**
dans la trame de données (Fr), on a prévu environ 40 millisecondes par canal.

16. Installation de transmission de données (100, 100a, 100b) pour transmettre des données à impératif de priorité, notamment des données vocales et/ou vidéo et des données sans impératif de temps réel, les installations de transmission de données (100, 100a, 100b) divisent la capacité de transmission disponible en trames de données (Fr) ayant plusieurs canaux, au moins un premier canal transmettant les données avec impératif de temps réel et au moins un second canal transmettant les données sans impératif de temps réel,
installation **caractérisée en ce que**
l'installation de transmission de données (100, 100a, 100b) transmet un droit d'émission pour au moins un canal à une autre installation de transmission de données (100a) **en ce que** l'installation de transmission de données (100) fixe un temps de réponse à l'autre installation de transmission de données (100a) et l'envoie à cette autre installation de transmission de données (100a).

17. Installation de transmission de données (100, 100a, 100b) selon la revendication 16,
**caractérisée en ce qu'**
elle est réalisée pour exécuter le procédé selon l'une des revendications 1 à 15.

18. Système (200) de transmission de données à plusieurs installations de transmission de données (100, 100a, 100b) selon la revendication 16 ou 17.
